# EUROPÄISCHE PATENTSCHRIFT

(11) **EP 0 658 257 B1**
(45) Veröffentlichungstag und Bekanntmachung des Hinweises auf die Patenterteilung: **18.12.1996**
(21) Anmeldenummer: 93918768.8
(22) Anmeldetag: 02.09.1993
(51) Int. Cl.: G06F 11/08, G06F 11/10, G06F 11/00

(54) **KOMMUNIKATIONSKONTROLLEINHEIT UND VERFAHREN ZUR ÜBERMITTLUNG VON NACHRICHTEN**
COMMUNICATIONS CONTROL UNIT AND INFORMATION TRANSMISSION PROCESS
CONTROLEUR DE COMMUNICATION ET PROCEDE DE TRANSMISSION D'INFORMATIONS

(30) Priorität: 04.09.1992 AT 1772/92
(43) Veröffentlichungstag der Anmeldung: 21.06.1995
(73) Patentinhaber: FAULT TOLERANT SYSTEMS, A-2500 Baden b. Wien (AT)
(72) Erfinder: KOPETZ, Hermann, A-2500 Baden b. Wien (AT)
(74) Vertreter: Matschnig, Franz, Dipl.-Ing.
(86) Internationale Anmeldenummer: AT9300138
(87) Internationale Veröffentlichungsnummer: WO9406080

(56) Entgegenhaltungen:
- EP-A- 0 033 228
- US-A- 4 860 006

## Beschreibung

Die Erfindung bezieht sich auf eine Kommunikationskontrolleinheit und ein Verfahren zur Übermittlung von Nachrichten innerhalb einer verteilten Echtzeit-Computerarchitektur mit einer gemeinsamen globalen Zeitbasis, bestehend aus einer Mehrzahl Fehlertoleranter Einheiten, welche zumindest je einen fail-silent Computer und je Computer eine Kommunikationskontrolleinheit mit zumindest einem Kommunikationsport aufweisen, wobei jede Fehlertolerante Einheit über zumindest einen Kommunikationskanal mit jeder anderen Fehlertoleranten Einheit verbunden ist und der Zugriff auf den zumindest einen Kommunikationskanal durch ein statisches, von der gemeinsamen globalen Zeitbasis abgeleitetes zyklisches Zeitscheibenverfahren erfolgt.

Die oben genannte, bekannte Computerarchitektur besteht aus einer Anzahl von global synchronisierten fail-silent Computern, die in Fehlertolerante Einheiten zusammengefaßt sind und über ein Broadcastkommunikationssystem Nachrichten austauschen, wobei eine Fehlertolerante Einheit aus zumindest einem fail-silent Computer besteht und jeder Computer eine Kommunikationskontrolleinheit mit mindestens einem Kommunikationsport besitzt. Um den Ausfall eines Computers tolerieren zu können sind häufig zwei aktive Computer, die quasisynchron dieselben Zustandsübergänge vollziehen, zu einer Fehlertoleranten Einheit zusammengefaßt. Das Kommunikationssystem kann z.B. durch den Einsatz von zwei parallelen Kommunikationskanälen redundant ausgelegt sein, wobei jeder Computer über zwei Kommunikationsports der Kommunikationskontrolleinheit an je einen Kanal des Broadcastkommunikationssystems angeschlossen ist. Um auch das Auftreten von hohen transienten Fehlerraten zu beherrschen, kann eine Fehlertolerante Einheit (FTE) neben den beiden aktiv redundanten Computern auch noch einen Schattencomputer beinhalten. Eine solche Architektur ist in Kopetz, H., Kantz, H, Grünsteidl, G, Puschner P, und Reisinger, J, "Tolerating Transient Faults in MARS", Proc. 20th int. Symposium on Fault-Tolerant Computing, IEEE Press, pp., 466 - 473, Juni 1990, genau beschrieben.

Die Übermittlung der Nachrichten erfolgt über ein Verfahren, bei welchem die Zugriffsberechtigung auf die Kommunikationskanäle nach einem statischen Zeitscheibenverfahren von der globalen Zeit abgeleitet wird, sodaß jede Kommunikationskontrolleinheit a priori weiß, wann eine andere Kommunikationskontrolleinheit eine Nachricht zu senden hat. Jede Kommunikationskontrolleinheit verfügt daher über eine lokale Echtzeituhr, die mit allen anderen Kommunikationskontrolleinheiten innerhalb einer gegebenen Synchronisationsgenauigkeit synchronisiert ist. Ein Verfahren zur Synchronisation der Uhren der Kommunikationskontrolleinheit ist in Kopetz, H., und Ochsenreiter, W., Clock Synchronisation in Distributed Real-Time Systems, IEEE Transactions on Computers, vol c-36, pp. 933 - 940, August 1987, genau beschrieben.

Eine fehlertolerante Echtzeit-Computerarchitektur muß alle Fehlerfälle, die in der Fehlerhypothese spezifiziert sind, nachweislich beherrschen. Zu diesem Zweck sind vom Kommunikationssystem folgende Aufgaben zu erfüllen:
(1) Rechtzeitiger und sicherer Nachrichtenaustausch zwischen den Computern unter Einhaltung der spezifizierten Zeitbedingungen, auch im Fehlerfall.
(2) Erkennung von transienten und permanenten Nachrichtenverlusten.
(3) Konsistente Erkennung vom Computerausfäflen.
(4) Verteiltes Redundanzmanagement, d.h. konsistentes Abschalten von fehlerhaften Computern und Zuschalten von reparierten Computern.
(5) Synchronisation der lokalen Uhren.
(6) Schnelle Reaktion in Notsituationen.

Weiters sollen in einem Echtzeitkommunikationssystem die Nachrichtenlänge und die Anzahl der Verwaltungsnachrichten möglichst gering sein, um bei einer gegebenen Bandbreite des Kommunikationskanals eine schnelle Reaktion des Systems zu unterstützen. Eine kurze Nachrichtenlänge und eine geringe Zahl von Verwaltungsnachrichten ist bei schnellen zeitkritischen Prozessen, z.B. in der Automobil- oder Flugzeugelektronik, von großer wirtschaftlicher Bedeutung, da eine Erhöhung der Bandbreite hohe Kosten verursacht.

Gemäß dem Stand der Technik werden die beschriebenen Aufgaben auf unterschiedlichen Ebenen - in Hardware und/oder Software - realisiert, wobei eine Vielzahl zusätzlicher Verwaltungsnachrichten über das Kommunikationssystem zu transportieren ist. Solche Verfahren zur Nachrichtenübermittlung sind beispielsweise unter der Bezeichnung J1850, CAN und Token Slot Network bekannt geworden (1992 SAE Handbook, Vol, pp. 20.301-20.302, Society of Automotive Engineers, 400 Commonwealth Drive, Warrendale, Pa, USA).

Das Dokument EP-A-33228 betrifft ein redundantes Kommunikationssystem, bei welchem die Redundanz in der Verwendung von dualen Kommunikationskanälen besteht. CRC-erechnungen werden verwendet, um zu überprüfen, daß die Kommunikationskanäle die jeweiligen Meldungen richtig übermitteln. Bei diesen Berechnungen wird keine Information über den inneren Zustand einer beteiligten Kontrolleinheit berücksichtigt.

Weiters geht aus der US-A-4 860 006 ein System hervor, bei welchem vermieden werden soll, daß "Heartbeat" Meldungen eines Kommunikationssystems kollidieren. Eine CRC-erechnung wird bei diesem bekannten System nicht verwendet.

Die Erfindung zielt darauf ab, die obigen Aufgaben durch ein integriertes Verfahren in der Hardware der Kommunikationskontrolleinheit zu realisieren, wobei durch Auswertung der a priori Informationen über das Zeitverhalten und der laufenden Information über das Betriebsverhalten des Kommunikationssystems die Anzahl der Verwaltungsnachrichten und die Nachrichtenlänge wesentlich reduziert werden können.

Diese Aufgaben werden erfindungsgemäß durch eine Kommunikationskontrolleinheit gemäß Anspruch 9 und ein Verfahren gemäß Anspruch 1 zur Übertragung von Nachrichten gelöst, bei welchem die zu übertragenden Nachrichten aus einem Kontrollfeld, einem Datenfeld und einem CRC (Cyclic Redundancy Check) Feld zusammengesetzt sind, wobei das CRC-Feld von Standardnachrichten, welche durch ein bestimmtes Bit des Kontrollfeldes gekennzeichnet sind, aus der Verkettung des Kontrollfeldes, des Datenfeldes und eines lokalen inneren Zustandes einer sendenden Kommunikationskontrolleinheit gebildet wird und sich der lokale innere Zustand einer solchen Kontrolleinheit aus der Verbindung der globalen Zeit mit einem Mitgliedsfeld ergibt, in welchem jeder Fehlertoleranten Einheit ein bestimmtes Bit zugeordnet ist, dessen Zustand WAHR die Funktionstüchtigkeit und dessen Zustand FALSCH einen Fehlerzustand dieser Fehlertoleranten Einheit anzeigt, sodaß eine empfangende Kommunikationskontrolleinheit durch Überprüfung einer einlangenden Nachricht sowohl eine fehlerhafte Nachricht als auch ein Abweichen der inneren Zustände der sendenden und empfangenden Kommunikationskontrolleinheit erkennen kann. Die erfindungsgemäße Kommunikationskontrolleinheit ist als ein Singlechip-Controller oder als ein Teil eines Singlechip Mikrocomputers realisiert.

Weitere Vorteile und Merkmale der Erfindung ergeben sich aus den abhängigen Unteransprüchen und der folgenden Beschreibung eines Ausführungsbeispiels der Erfindung, welche sich auf die beiliegenden Figuren bezieht, die zeigen:
Figur 1 eine schematische Darstellung einer Fehlertoleranten Echtzeit-Computerarchitektur zur Übertragung von Nachrichten,
Figur 2 eine schematische Darstellung des Datenformates der zu übertragenden Nachrichten.

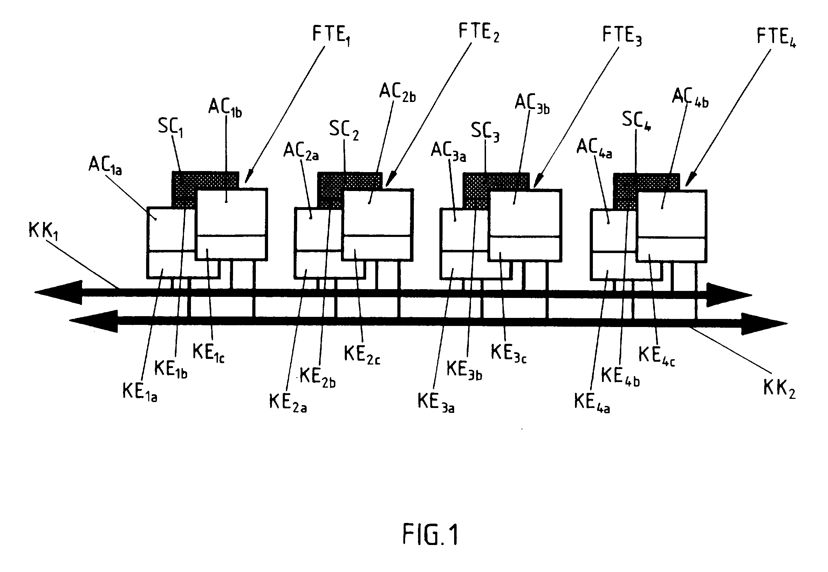

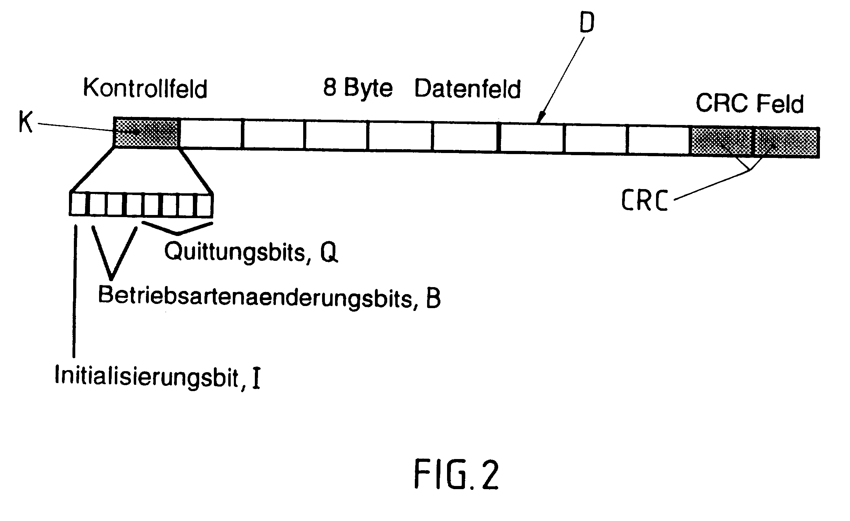

Die Erfindung soll nun anhand des in Figur 1 und 2 dargestellten Ausführungsbeispiels näher erläutert werden. In diesem Beispiel soll der Ausfall einer Nachricht je Übertragung einer Fehlertoleranten Einheit oder der permanente Ausfall einer Kommunikationskontrolleinheit je Fehlertolerante Einheit oder der Ausfall eines kompletten Kommunikationskanals toleriert werden, d.h. es gibt in diesem Beispiel keine Baueinheit, deren Ausfall nicht toleriert wird. Weiters soll in diesem Beispiel zusätzlich zu den zitierten Ausfällen auch noch ein zweiter permanenter oder transienter Fehler durch den Einsatz eines Schattencomputers toleriert werden. Falls der Ausfall mehrerer Nachrichten toleriert werden soll, so sind die Nachrichten mehrfach zu senden.

Es sei die in Fig. 1 angeführten Konfiguration mit 4 Fehlertoleranten Einheiten FTE₁ FTE₂ FTE₃ FTE₄ mit jeweils zwei aktiven Computern AC₁ₐ, AC_{1b}, AC₂ₐ, AC_{2b}, AC₃ₐ, AC_{3b}, AC₄ₐ, AC_{4b} und je einem Schattencomputer SC₁, SC₂, SC₃, SC₄ gegeben. Jede Kommunikationskontrolleinheit KE₁ₐ, KE_{1b}, KE_{1c}, KE₂ₐ, KE_{2b}, KE_{2c}, KE₃ₐ, KE_{3b}, KE_{3c}, KE₄ₐ, KE_{4b}, KE_{4c} ist über zwei Kommunikationskanäle KK₁, KK₂ mit jeder anderen Kommunikationskontrolleinheit verbunden und verfügt über eine lokale Echtzeituhr, die mit allen anderen Kommunikationskontrolleinheiten innerhalb einer gegebenen Synchronisationsgenauigkeit synchronisiert ist. Die Zugriffsberechtigung auf die redundanten Kommunikationskanäle KK₁, KK₂ wird nach einem statischen Zeitscheibenverfahren von der globalen Zeit abgeleitet. Das Zeitintervall, während dem jede Fehlertolerante Einheit FTE₁ FTE₂ FTE₃ FTE₄ mindestens einmal eine Sendezeitscheibe erhalten hat, bezeichnet man als Übertragungsrunde.

Da die Sendezeitpunkte jeder Nachricht a priori bekannt sind, kann in dieser neuen Kommunikationsarchitektur auch auf den Transport des Nachrichtennamens in der Nachricht verzichtet werden. Der Empfänger ist in der Lage aufgrund des Empfangszeitpunktes den Nachrichtennamen zu rekonstruieren. Dadurch ergibt sich eine wesentliche Reduktion der Nachrichtenlänge.

In der folgenden Beschreibung werden die Indizes 1, 2, 3, 4 zur Unterscheidung der einzelnen Fehlertoleranten Einheiten FTE der Übersicht halber weggelassen, da diese Einheiten im wesentlichen gleich aufgebaut sind.

Jede Kommunikationskontrolleinheit KE verfügt über einen inneren Zustand, der sich im konkreten Beispiel aus dem globalen Zeitfeld und einem 4 Bit langen Mitgliedsfeld zusammensetzt. Jedem der vier Fehlertoleranten Einheiten FTE ist ein bestimmtes Bit in diesem Mitgliedsfeld zugeordnet, dessen Zustand WAHR die Funktionstüchtigkeit und dessen Zustand FALSCH einen Fehlerzustand dieser Fehlertoleranten Einheit FTE aus der Sicht der betrachtenden Kommunikationskontrolleinheit KE zum Zeitpunkt der letzten global bekannten Sendezeitscheibe dieser Fehlertoleranten Einheit FTE darstellt.

Bei dem erfindungsgemäßen Verfahren wird prinzipiell zwischen zwei Nachrichtenarten unterschieden, den Initialisierungsnachrichten und den Standardnachrichten. Beide Nachrichtenarten beinhalten ein Kontrollfeld K, ein Datenfeld D und ein CRC (Cyclic Redundancy Check) Feld. Das Nachrichtenformat für das konkrete Ausführungsbeispiel ist in Fig. 2 dargestellt. Das Kontrollfeld K hat eine Länge von 1 Byte. Das erste Bit des Kontrollfelds ist das Initialisierungsbit I. Die nächsten drei Bits sind die Betriebsänderungsbits B und die letzten vier Bits des Kontrollfelds sind Quittungsbits Q. Das Datenfeld D hat eine Länge von 8 Byte. Das CRC Feld hat eine Länge von 2 Byte.

Bei Initialiserungsnachrichten, die durch den Wert WAHR im ersten Bit I des Kontrollfelds gekennzeichnet sind und die im Datenfeld D den inneren Zustand der sendenden Kommunikationskontrolleinheit enthalten, wird der Inhalt des CRC Felds nach einem bekannten Verfahren (CCITT Standard: Data Transmission over the Telephone Network, Series V Recommendations, Session V41, The Orange Book, VIII.1, International Telecommunications Union, Geneva, 1977) über die Verkettung von Kontrollfeld K und Datenfeld D gebildet. Die Initialisierungsnachrichten werden zur Initialisierung des Systems und zur Reintegration von reparierten Computern benötigt. Im normalen Betrieb ist das Senden von Initialisierungsnachrichten nicht erforderlich. Die Initialisierungsnachrichten können im Hintergrund übertragen werden, wenn keine anderen Nachrichten zu senden sind.

Bei Standardnachrichten, die durch den Wert FALSCH im ersten Bit I des Kontrollfelds K gekennzeichnet sind, wird der Inhalt des CRC Felds bei der sendenden Kommunikationskontrolleinheit KE erfindungsgemäß über die Verkettung von Kontrollfeld K, Datenfeld D und dem lokalen inneren Zustand des Senders gebildet. Die empfangende Kommunikationskontrolleinheit KE kann durch die CRC-Überprüfung der Verkettung der ankommenden Nachricht mit ihrem lokalen inneren Zustand eine fehlerhafte Nachricht oder ein Abweichen der inneren Zustände von Empfänger und Sender erkennen. Um diese Zustandsgleichheit schnell, d.i. vor dem Senden der nächsten Nachricht, überprüfen zu können, ist das beschriebene CRC Verfahren vorteilhaft in der Hardware ausgeführt. Erfindungsgemäß kann durch diese Innovation die Gleichheit der Zustände zwischen Sender und Empfänger (damit wird eine indirekte Bestätigung des Nachrichtenempfangs realisiert) festgestellt werden, ohne die Zustandsinformation selbst in der Nachricht übertragen zu müssen. Dadurch ergibt sich in vorteilhafter Weise eine signifikante Reduktion der Nachrichtenlänge.

Bei einem weiteren, hier nicht näher erläuterten, Ausführungsbeispiel kann es vorteilhaft sein, den inneren Zustand durch zusätzliche Informationen, wie z.B. den momentanen Betriebszustand oder kryptographische Informationen, zu ergänzen, um auch die Gleichheit dieser zusätzlichen Informationen beim Sender und Empfänger durch das beschriebene innovative Verfahren überprüfen zu können. Verschiedenen Betriebszuständen können unterschiedliche Nachrichtenformate und unterschiedliche Übertragungsrunden zugeordnet werden.

Wenn im Bit I, das zur Unterscheidung von Initialisierungsnachrichten und Standardnachrichten dient, ein Fehler auftritt, so wird durch die beschriebene Erfindung im Rahmen der CRC Überprüfung diese Nachricht als fehlerhaft erkannt und verworfen.

Eine empfangende Kommunikationskontrolleinheit KE kennzeichnet eine Fehlertolerante Einheit FTE in ihrem Mitgliedsfeld als fehlerhaft, wenn in der a priori bekannten Zeitscheibe dieser Fehlertoleranten Einheit FTE keine der erwarteten Nachrichten dieser Fehlertoleranten Einheit FTE mit korrektem CRC Feld bei der empfangenden Kommunikationskontrolleinheit KE eintrifft. Aufgrund des a priori Wissens über die Zeitscheiben des Senders kann der Empfänger zwei verschiedene Fehlerarten unterscheiden: keine Nachricht wurde empfangen oder eine Nachricht mit einem falschen Inhalt (fehlerhafter CRC check) wurde empfangen. Der Empfänger zählt mittels eines CRC-Fehlerzählers die seit seinem letzten Sendezeitpunkt empfangenen Nachrichten mit fehlerhaften CRC. Die seit seinem letzten Sendezeitpunkt empfangenen richtigen Nachrichten zählt der Empfänger in einem OK-Zähler.

Der entsprechend seinem lokalen Mitgliedsfeld erste aktive Nachfolger der sendenden Fehlertoleranten Einheit FTE quittiert in seinem Kontrollfeld die korrekt empfangenen Nachrichten der vorausgegangenen Fehlertoleranten Einheit FTE.

Unmittelbar vor dem Senden entscheidet eine Kommunikationskontrolleinheit, ob ihre Funktion fehlerhaft ist. Eine Kommunikationskontrolleinheit KE betrachtet sich dann als fehlerhaft, wenn
(1) einer ihrer Fehlererkennungsmechanismen einen Fehler anzeigt oder
(2) keine ihrer Nachrichten, die sie in ihrer letzten FTE Zeitscheibe gesendet hat, von einer der Kommunikationskontrolleinheiten KE der nachfolgenden Fehlertoleranten Einheit FTE quittiert wurde, oder
(3) der Inhalt ihres OK-Zählers kleiner ist als der Inhalt ihres CRC-Fehlerzählers.

Wenn sich eine Kommunikationskontrolleinheit KE als fehlerhaft einstuft, so sendet sie keine Nachricht, geht in einen Fehlerbehandlungszustand über und initialisiert einen Wiederanlauf.

Das beschriebene Verfahren funktioniert auch, wenn eine Kommunikationskontrolleinheit KE innerhalb einer Übertragungsrunde mehrfach aufscheint.

Die Kommunikationskontrolleinheit KE eines Schattencomputers SC erkennt aufgrund des Ausbleibens der Nachrichten der aktiven Computer AC ihrer Fehlertoleranten Einheit FTE,. daß diese Computer ausgefallen sind. In einem solchen Fall übernimmt die Kommunikationskontrolleinheit KE des Schattencomputers SC die Sendezeitscheibe des ausgefallenen Computers, um die Redundanz kurzfristig wieder herzustellen.

Aus dem Zeitintervall zwischen dem erwarteten und tatsächlichen Eintreffen einer Nachricht kann die Differenz der Uhrenstände zwischen Sender und Empfänger vom Empfänger berechnet werden. Erfindungsgemäß ist in diesem Kommunikationssystem kein expliziter Nachrichtenaustausch zur Uhrensynchronisation erforderlich. Dies führt zu einer wesentlichen Reduktion der Nachrichtenzahl.

Eine schnelle Reaktion bei Auftreten einer Notsituation wird erfindungsgemäß durch die Bereitstellung einer Anzahl von Betriebszustandsänderungsbits B im Kontrollfeld K jeder Nachricht realisiert. Im vorliegenden Beispiel sind drei solche Betriebszustandsänderungsbits B vorgesehen. Wenn eine Kommunikationskontrolleinheit KE eine schnelle Betriebszustandsänderung signalisieren muß, so kann sie das entsprechende Betriebszustandsänderungsbit B setzen. Spätestens innerhalb der nächsten Übertragungsrunde können dann alle anderen Computer auf die Betriebszustandsänderung reagieren.

Durch die beschriebene Erfindung kann die Effizienz der Kommunikation in Echtzeitsystemen wesentlich verbessert werden. Vergleicht man dieses innovative Verfahren mit den in der Literatur veröffentlichten Verfahren (1992 SAE Handbook, Vol, pp. 20.301-20.302, Society of Automotive Engineers, 400 Commonwealth Drive, Warrendale, Pa, USA), so ergibt sich gegenüber den bisher bekannten Verfahren J1850, CAN und Token Slot Network eine Ausweitung der Dienste und eine Verbesserung der Antwortzeiten um mehr als 50 %.

Zusammenfassend sei festgehalten, daß die folgenden innovativen Merkmale dieser Erfindung zu einer wesentlichen Reduktion der Nachrichtenlänge und der Nachrichtenzahl in einem Kommunikationssystem für eine Fehlertolerante verteilte Echtzeit-Computerarchitektur führen:
(1) Die Feststellung der Zustandsgleichheit zwischen Sender und Empfänger ohne Übertragung der Zustandsinformation durch Einbeziehung der Zustandsinformation in die CRC Berechnung.
(2) Die Elimination der Quittungsnachrichten durch Einführung eines kurzen Quittungsfeldes in jeder Nachricht.
(3) Die implizite Synchronisation der Uhren ohne Übertragung von Synchronisationsnachrichten.
(4) Die Ableitung des Nachrichtennamens aus den a priori bekannten Sende- und Empfangszeitpunkten einer Nachricht ohne den Nachrichtennamen explizit übertragen zu müssen.
(5) Die Bereitstellung eines Betriebszustandsänderungsfeldes in jeder Nachricht, um auf wichtige Betriebszustandsänderungen ohne zusätzlichen Nachrichtenaustausch schnell reagieren zu können.
(6) Die Auswertung der Verhältniszahl der mit richtigem und falschem CRC Feld eintreffenden Nachrichten, um ohne expliziten Nachrichtenaustausch feststellen zu können, ob sich ein Empfänger in der Mehrheit der funktionierenden Kommunikationseinheiten befindet.

Abschließend ist noch anzuführen, daß sich die Erfindung keineswegs auf die oben beschriebene Konfiguration mit vier Fehlertoleranten Einheiten FTE beschränkt, sondern mit jeder beliebigen Anzahl Fehlertoleranter Einheiten implementiert werden kann. Ebenso ist die Konfiguration einer Fehlertoleranten Einheit nicht auf zwei aktive Computer und einen Schattencomputer mit je einer Kommunikationskontrolleinheit mit zwei Ports und das Broadcastsystem nicht auf zwei Kommunikationskanäle beschränkt, sondern kann entsprechend der geforderten Redundanz völlig beliebig gewählt werden. Insbesondere können die Kommunikationskanäle auch als "on-board" oder "on-chip" Verbindungen ausgeführt sein.

## Patentansprüche

1. Verfahren zur Übermittlung von Nachrichten innerhalb einer verteilten Echtzeit-Computerarchitektur mit einer gemeinsamen globalen Zeitbasis, bestehend aus einer Mehrzahl Fehlertoleranter Einheiten (FTE₁, FTE₂, FTE₃, FTE₄), welche zumindest je einen fail-silent Computer (AC₁ₐ, AC_{1b}, SC₁, AC_{2a,} AC_{2b}, SC₂, AC_{3a,} AC_{3b}, SC₃, AC₄ₐ, AC_{4b}, SC₄) und je Computer eine Kommunikationskontrolleinheit (KE₁ₐ, KE_{1b}, KE_{1c}, KE₂ₐ, KE_{2b}, KE_{2c}, KE₃ₐ, KE_{3b}, KE_{3c}, KE₄ₐ, KE_{4b}, KE_{4c}) mit zumindest einem Kommunikationsport aufweisen, wobei jede Fehlertolerante Einheit (FTE₁, FTE₂, FTE₃, FTE₄) über zumindest einen Kommunikationskanal (KK₁, KK₂) mit jeder anderen Fehlertoleranten Einheit (FTE₁, FTE₂, FTE₃, FTE₄) verbunden ist und der Zugriff auf den zumindest einen Kommunikationskanal (KK₁, KK₂) durch ein statisches, von der gemeinsamen globalen Zeitbasis abgeleitetes zyklisches Zeitscheibenverfahren erfolgt, **dadurch gekennzeichnet, daß** die zu übertragenden Nachrichten aus einem Kontrollfeld (K), einem Datenfeld (D) und einem CRC (Cyclic- Redundancy Check) Feld (CRC) zusammengesetzt sind, wobei das CRC-Feld von Standardnachrichten, welche durch ein bestimmtes Bit (I) des Kontrollfeldes (K) gekennzeichnet sind, aus der Verkettung des Kontrollfeldes (K), des Datenfeldes (D) und eines lokalen inneren Zustandes einer sendenden Kommunikationskontrolleinheit gebildet wird und sich der lokale innere Zustand einer solchen Kontrolleinheit aus der Verbindung der globalen Zeit mit einem Mitgliedsfeld ergibt, in welchem jeder Fehlertoleranten Einheit (FTE₁, FTE₂, FTE_{3,} FTE₄) ein bestimmtes Bit zugeordnet ist, dessen Zustand WAHR die Funktionstüchtigkeit und dessen Zustand FALSCH einen Fehlerzustand dieser Fehlertoleranten Einheit (FTE₁, FTE₂, FTE₃, FTE₄) anzeigt, sodaß eine empfangende Kommunikationskontrolleinheit durch Überprüfung einer einlangenden Nachricht sowohl eine fehlerhafte Nachricht, als auch ein Abweichen der inneren Zustände der sendenden und empfangenden Kommunikationskontrolleinheit erkennen kann.

2. Verfahren nach Anspruch 1, **dadurch gekennzeichnet, daß** die empfangende Kommunikationskontrolleinheit eine Fehlertolerante Einheit (FTE₁, FTE₂, FTE₃, FTE₄) durch Setzen des zugeordneten Bits im Mitgliedsfeld als fehlerhaft kennzeichnet, wenn im Sendezeitintervall dieser Einheit keine der erwarteten Nachrichten mit einem korrekten CRC-Feld (CRC) eintrifft.

3. Verfahren nach Anspruch 1 oder 2, **dadurch gekennzeichnet, daß** das Kontrollfeld (K) als erstes Bit ein Initialisierungsbit () zur Unterscheidung zwischen Standard- und Initialisierungsnachrichten aufweist.

4. Verfahren nach Anspruch 3, **dadurch gekennzeichnet, daß** das Kontrollfeld (K) weiters eine Anzahl von Quittungsbits (Q) aufweist, mittels welchen der korrekte Empfang einer oder mehrerer vorangegangener Nachrichten quittiert wird, sodaß jede Kommunikationskontrolleinheit durch Überprüfung des Kontrollfeldes (K) bei Empfang einer Nachricht feststellen kann, ob alle ihre Kommunikationsports funktioniert haben und weiters aufgrund des Verhältnisses der Anzahl korrekt empfangener Nachrichten zu der Anzahl von Nachrichten mit CRC-Fehlern erkennen kann, ob sie sich in der Mehrheit der funktionierenden Kommunikationskontrolleinheiten befindet.

5. Verfahren nach Anspruch 3 oder 4, **dadurch gekennzeichnet, daß** das Kontrollfeld (K) weiters eine Anzahl von Betriebsartenänderungsbits (B) aufweist.

6. Verfahren nach einem der Ansprüche 1 bis 4, **dadurch gekennzeichnet, daß** der innere Zustand, der bei Bildung des CRC-Feldes von Standardnachrichten eingeschlossen und beim Empfänger überprüft wird, weiters ein Betriebsartenfeld umfaßt.

7. Verfahren nach einem der Ansprüche 1 bis 6, **dadurch gekennzeichnet, daß** der Nachrichtenname aus dem a priori festgelegten Sendezeitpunkt einer Nachricht abgeleitet wird, sodaß dieser nicht im Nachrichteninhalt mitgeführt werden muß.

8. Verfahren nach einem der Ansprüche 1 bis 7, **dadurch gekennzeichnet, daß** die Erstellung der globalen Zeitbasis dezentral in jeder Kommunikationskontrolleinheit erfolgt, wobei die Unterschiede der Uhrenstände zwischen den Fehlertoleranten Einheiten (FTE₁, FTE₂, FTE₃, FTE₄) aus den bekannten, statisch festgelegten Sendezeitpunkten und der lokalen Messung der Ankunftszeiten der erwarteten Nachrichten ermittelt werden.

9. Kommunikationskontrolleinheit zur Übermittlung von Nachrichten innerhalb einer verteilten Echtzeit-Computerarchitektur mit einer gemeinsamen globalen Zeitbasis, bestehend aus einer Mehrzahl Fehlertoleranter Einheiten (FTE₁, FTE₂, FTE₃, FTE₄), welche zumindest je einen fail-silent Computer (AC₁ₐ, AC_{1b,} SC₁, AC₂ₐ, AC_{2b}, SC₂, AC_{3a,} AC_{3b}, SC₃, AC₄ₐ, AC_{4b}, SC₄) und je Computer eine solche Kommunikationskontrolleinheit (KE₁ₐ, KE_{1b}, KE_{1c}, KE₂ₐ, KE_{2b}, KE_{2c}, KE₃ₐ, KE_{3b}, KE_{3c}, KE₄ₐ, KE_{4b}, KE_{4c}) mit zumindest einem Kommunikationsport aufweisen, wobei jede Fehlertolerante Einheit (FTE₁, FTE₂, FTE₃, FTE₄) über zumindest einen Kommunikationskanal (KK₁, KK₂) mit jeder anderen Fehlertoleranten Einheit (FTE₁, FTE₂, FTE₃, FTE₄) verbunden ist und der Zugriff auf den zumindest einen Kommunikationskanal (KK₁, KK₂) durch ein statisches, von der gemeinsamen globalen Zeitbasis abgeleitetes zyklisches Zeitscheibenverfahren erfolgt, **dadurch gekennzeichnet, daß** sie als ein Singlechip Controller oder als ein Teil eines Singlechip Microcomputers realisiert ist, in welchem eine Kommunikationskontrolleinheit vorgesehen ist, welche die zu übertragenden Nachrichten aus einem Kontrollfeld (K), einem Datenfeld (D) und einem CRC (Cyclic- Redundancy Check) Feld (CRC) zusammensetzt, wobei das CRC-Feld von Standardnachrichten, welche durch ein bestimmtes Bit (I) des Kontrollfeldes (K) gekennzeichnet sind, aus der Verkettung des Kontrollfeldes (K), des Datenfeldes (D) und eines lokalen inneren Zustandes einer sendenden Kommunikationskontrolleinheit gebildet wird, und wobei der die Kommunikationskontrolleinheit enthaltende Singlechip Controller oder Microcomputer weiters dazu vorgesehen ist, den lokalen inneren Zustand der Kommunikationskontrolleinheit aus der Verbindung der globalen Zeit mit einem Mitgliedsfeld zu erstellen, in welchem jeder Fehlertoleranten Einheit (FTE₁, FTE₂, FTE₃, FTE₄) ein bestimmtes Bit zugeordnet ist, dessen Zustand WAHR die Funktionstüchtigkeit und dessen Zustand FALSCH einen Fehlerzustand dieser Fehlertoleranten Einheit (FTE₁, FTE₂, FTE₃, FTE₄) anzeigt, sodaß eine empfangende Kommunikationskontrolleinheit durch Überprüfung einer einlangenden Nachricht sowohl eine fehlerhafte Nachricht, als auch ein Abweichen der inneren Zustände der sendenden und empfangenden Kommunikationskontrolleinheit erkennen kann.

10. Kommunikationskontrolleinheit nach Anspruch 9, **dadurch gekennzeichnet, daß** sie je einen Zähler zum Feststellen der Anzahl korrekt empfangener Nachrichten und einen Zähler zum Festellen der Anzahl empfangender Nachrichten mit CRC-Fehlem aufweist.

11. Kommunikationskontrolleinheit nach Anspruch 9 oder 10, **dadurch gekennzeichnet, daß** sie eine Logik aufweist, welche dazu geeignet ist, nach Empfang einer Nachricht eine Änderung der Betriebsart der Fehlertoleranten Einheit (FTE₁, FTE₂, FTE₃, FTE₄) herbeizuführen.

12. Kommunikationskontrolleinheit nach einem der Ansprüche 9 bis 11, **dadurch gekennzeichnet, daß** sie eine Logik zum Feststellen der Ankunftszeit und zum Vergleich dieser Ankunftszeitpunkte mit den a priori festgelegten Sendzeitpunkten einer Nachricht aufweist.

## Claims

1. Method for the transmission of messages within a distributed real-time computer architecture with a global time base, comprising a plurality of fault-tolerant units (FTE₁, FTE₂, FTE₃, FTE₄) where each fault-tolerant unit FTE) contains at least one fail-silent computer (AC_{1a,} AC_{1b}, SC₁, AC₂ₐ, AC_{2b}, SC_{2,} AC₃ₐ, AC_{3b}, SC₃, AC₄ₐ, AC_{4b}, SC₄) and where each computer has a communication control unit (KE₁ₐ, KE_{1b}, KE_{1c}, KE₂ₐ, KE_{2b}, KE_{2c,} KE₃ₐ, KE_{3b}, KE_{3c}, KE₄ₐ, KE_{4b}, KE_{4c}) with at least one communication port, whereby each fault-tolerant unit (FTE₁, FTE₂, FTE₃, FTE₄) is connected to every other fault-tolerant unit (FTE₁, FTE₂, FTE₃, FTE₄) by at least one communication channel (KK₁, KK₂) and where the access to the communication channel (KK₁, KK₂) is determined by a cyclic time division multiple access scheme, which is derived from a global time base, **characterized in that** the messages to be sent comprise a control field (K), a data field (D) and a CRC (Cyclic Redundancy Check) field (CRC), where the contents of the CRC field of normal messages, which are identified by a specified bit (I) of the control field (K), are calculated over the concatenation of the control field (K), the data field (D) and the local internal state of a sending communication control unit, and where the local internal state of such a communication control unit is composed of the concatenation of the current global time with a membership field, in which each fault-tolerant unit (FTE₁, FTE₂, FTE₃, FTE₄) is represented by a specified bit, the value TRUE of which means that said fault-tolerant unit is operating and the value FALSE means that said fault-tolerant unit is faulty, in order that the receiving communication control unit can, by checking the incoming messages, detect a mutilated message as well as a deviation of the internal state of the receiving from the internal state of the sending communication control unit.

2. The method of claim 1, **characterized in that** the receiving communication control unit marks a fault-tolerant unit (FTE₁, FTE₂, FTE₃, FTE₄) as faulty by setting the corresponding bit in its membership field to FALSE, if none of the expected messages with a correct CRC field (CRC) has been received in the timeslots that have been assigned to this sending unit.

3. The method of claim 1 or 2, **characterized in that** the control field (K) contains as the first bit an initialization bit (I) to specify whether the message is an initialization message or a normal message.

4. The method of claim 3, **characterized in that** the control field (K) contains additionally a number of acknowledgment bits (Q), by means of which the correct receipt of one or more of the preceding messages is acknowledged, in order that each receiving communication control unit can determine by checking the control field of an incoming message, whether all its communication ports have been operational and whether it is a member of the majority of the set of operating communication control units by comparing the number of correctly received messages with the number of messages that were discarded because of failed CRC checks.

5. The method according to claim 3 or 4, **characterized in that** the control field (K) contains additionally a number of mode change bits (B).

6. The method according to any of the claims 1 to 5, **characterized in that** the local internal state, which is included in the calculation of the CRC field of normal messages, and which is checked by the receiver, contains additionally a mode field.

7. The method according to any of the claims 1 to 6, **characterized in that** the message name is derived from the a priori determined point in time of sending and receiving the message, thus eliminating the need to carry a message-name field in the message.

8. The method according to any of the claims 1 to 7, **characterized in that** the global timebase is established in a distributed manner in each communication control unit and where the differences between the states of the clocks in the fault-tolerant units (FTE₁, FTE₂, FTE₃, FTE₄) are determined on the basis of the a priori known points in time of sending a message and the locally measured points in time of receiving a message.

9. Communication control unit for the transmission of messages within a distributed real-time computer architecture with a global time base, comprising a plurality of fault-tolerant units (FTE₁, FTE₂, FTE₃, FTE₄) where each fault-tolerant unit (FTE) contains at least one fail-silent computer (AC₁ₐ, AC_{1b}, SC₁, AC₂ₐ, AC_{2b}, SC_{2,} AC₃ₐ, AC_{3b}, SC₃, AC₄ₐ, AC_{4b}, SC₄) and where each computer has a communication control unit (KE₁ₐ, KE_{1b}, K_{1c}, KE₂ₐ, KE_{2b,} KE_{2c,} KE₃ₐ, KE_{3b}, KE_{3c}, KE₄ₐ, KE_{4b}, KE_{4c}) with at least one communication port, whereby each fault-tolerant unit (FTE₁, FTE₂, FTE₃, FTE₄) is connected to a communication channel (KK₁, KK₂) with every other fault-tolerant unit (FTE₁, FTE₂, FTE₃, FTE₄) and where the access to the communication channel (KK₁, KK₂) is determined by a cyclic time division multiple access scheme which is derived from a global time base, **characterized in that** the communication control unit is realized as single chip control unit or as part of a single chip microcomputer and where the communication control unit is provided to construct the messages to be transmitted from a control field (K), a data field (D) and a CRC (Cyclic Redundancy Check) field (CRC), where the contents of the CRC field of normal messages, which are identified by a specified bit (I) of the control field (K), are calculated over the concatenation of the control field (K), the data field (D) and the local internal state of a sending communication control unit and where the communication control unit of this single chip microcomputer maintains a local internal state of the communication control unit that is composed from the concatenation of the current global time with a membership field, in which each fault-tolerant unit (FTE₁, FTE₂, FTE₃, FTE₄) is represented by a specified bit, which value TRUE means that said fault-tolerant unit is operating and the value FALSE means that said fault-tolerant unit is faulty, in order that the receiving communication control unit can, by checking the incoming messages, detect a mutilated message as well as a deviation of the internal state of the receiving from the internal state of the sending communication control unit.

10. A communication control unit according to claim 9, **characterized in that** it contains two counters, one for counting the received messages with a correct CRC field and another one for counting the received messages with an erroneous CRC field.

11. A communication control unit according to claim 9 or 10, **characterized in that** it contains a logic to realize a mode change as soon as a message from another fault-tolerant unit (FTE₁, FTE₂, FTE ₃, FTE₄) is received in which a bit in the mode field is set.

12. A communication control unit according to any one of the claims 9 to 11, **characterized in that** it contains a logic to measure the difference between the a priori known point in time of expected arrival of a message and the actual point in time of receiving this message.

## Revendications

1. Procédé pour transmettre des informations à l'intérieur d'une architecture distribuée d'ordinateur en temps réel possédant une base de temps globale commune et constituée par une multiplicité d'unités (FTE₁, FTE₂, FTE₃, FTE₄), qui présentent une tolérance vis-à-vis d'erreurs et qui possèdent au moins chacune un ordinateur fail-silent (AC₁ₐ, AC_{1b}, SC₁,AC₂ₐ, AC_{2b}, SC₂,AC₃ₐ, AC_{3b}, SC₃, AC₄ₐ, AC_{4b}, SC₄), et chaque ordinateur comporte une unité de contrôle de communication (KE₁ₐ, KE_{1b}, KE_{1c}, KE₂ₐ, KE_{2b}, KE_{2c}, KE₃ₐ, KE_{3b}, KE_{3c}, KE₄ₐ, KE_{4b}, KE_{4c}) comportant au moins un port de communication, chaque unité (FTE₁, FTE₂, FTE₃, FTE₄) tolérante vis-à-vis d'erreurs étant reliée par l'intermédiaire d'au moins un canal de communication (KK₁, KK₂) à chaque autre unité (FTE₁, FTE₂, FTE₃, FTE₄) tolérante vis-à-vis d'erreurs, et l'accès au(x) canal(canaux) de communication (KK₁, KK₂) est réalisé au moyen d'un procédé statique cyclique à tranches temporelles, qui est dérivé de la base de temps globale commune, caractérisé en ce que les informations à transmettre sont formées par la réunion d'une zone de contrôle (K), d'une zone de données (D) et d'une zone CRC (Cyclic- Redundancy Check, contrôle de redondance cyclique) (CRC), la zone CRC étant formée par des informations standards, qui sont caractérisées par un bit déterminé (I) de la zone de contrôle (K), par le chaînage de la zone de contrôle (K) et de la zone de données (D) et d'un état interne local d'une unité émettrice de contrôle de communication, et l'état local interne d'une telle unité de contrôle est obtenu à partir de la liaison de durée globale avec une zone associée, dans laquelle à chaque unité (FTE₁, FTE₂, FTE₃, FTE₄), tolérante vis-à-vis d'erreurs, est associé un bit déterminé, dont l'état "VRAI" indique l'aptitude au fonctionnement et dont l'état "FAUX" indique un état d'erreur de cette unité (FTE₁, FTE₂, FTE₃, FTE₄) tolérante vis-à-vis d'erreurs, de sorte qu'une unité réceptrice de contrôle de communication peut identifier, au moyen du contrôle d'une information arrivante, aussi bien une information défectueuse qu'un écart entre les états internes des unités émettrice et réceptrice de contrôle de communication.

2. Procédé selon la revendication 1, caractérisé en ce que l'unité réceptrice de contrôle de communication caractérise une unité (FTE₁, FTE₂, FTE₃, FTE₄), tolérante vis-à-vis d'erreurs, comme défectueuse par positionnement du bit associé dans la zone associée, lorsqu'aucune information attendue possédant une zone CRC correcte (CRC) n'apparaît pendant l'intervalle d'émission de cette unité.

3. Procédé selon la revendication 1 ou 2, caractérisé en ce que la zone de contrôle (K) possède, en tant que premier bit, un bit d'initialisation 0 pour établir une distinction entre une information standard et une information d'initialisation.

4. Procédé selon la revendication 3, caractérisé en ce que la zone de contrôle (K) comporte en outre un certain nombre de bits d'accusé de réception (Q), au moyen desquels est fourni un accusé de réception pour la réception correcte d'une ou de plusieurs informations précédentes, de sorte que chaque unité de contrôle de communication peut déterminer, par contrôle de la zone de contrôle (K) lors de la réception d'une information, si tous ses ports de communication ont fonctionné, et d'autre part peut identifier, sur la base du rapport du nombre d'informations reçues correctement au nombre d'informations comportant des erreurs CRC, si elle est située dans la multiplicité des unités de contrôle de communication, qui fonctionnent.

5. Procédé selon la revendication 3 ou 4, caractérisé en ce que la zone de contrôle (K) possède en outre un certain nombre de bits (B) de modification d'état de fonctionnement.

6. Procédé selon l'une des revendications 1 à 4, caractérisé en ce que l'état interne, qui est inclus lors de la formation de la zone CRC d'informations standards et est contrôlé dans le récepteur, comporte en outre une zone de type de fonctionnement.

7. Procédé selon l'une des revendications 1 à 6, caractérisé en ce que le nom d'information est dérivé de l'instant d'émission, fixé a priori, d'une information de sorte que cette dernière n'a pas à être simultanément transmise dans le contenu en informations.

8. Procédé selon l'une des revendications 1 à 7, caractérisé en ce que l'établissement de la base de temps global s'effectue d'une manière décentralisée dans chaque unité de contrôle de communication, que les différences des états horaires entre les unités (FTE₁, FTE₂, FTE₃, FTE₄) tolérantes vis-à-vis d'erreurs sont déterminées à partir d'instants d'émission connus, fixés de façon statique, et de la mesure locale des instants d'arrivée des informations attendues.

9. Unité de contrôle de communication pour la transmission d'informations à l'intérieur d'une architecture distribuée d'ordinateur en temps réel possédant une base de temps globale commune et constituée par une multiplicité d'unités (FTE₁, FTE₂, FTE₃, FTE₄), qui présentent une tolérance vis-à-vis d'erreurs et qui possèdent au moins chacune un ordinateur fail-silent (AC₁ₐ, AC_{1b}, SC₁,AC₂ₐ, AC_{2b}, SC₂,AC₃ₐ, AC_{3b}, SC₃, AC₄ₐ, AC_{4b}, SC₄), et chaque ordinateur comporte une unité de contrôle de communication (KE₁ₐ, KE_{1b}, KE_{1c}, KE₂ₐ, KE_{2b}, KE_{2c}, KE₃ₐ, KE_{3b}, KE_{3c}, KE₄ₐ, KE_{4b}, KE_{4c}) comportant au moins un port de communication, chaque unité (FTE₁, FTE₂, FTE₃, FTE₄) tolérante vis-à-vis d'erreurs étant reliée par l'intermédiaire d'au moins un canal de communication (KK₁, KK₂) à chaque autre unité (FTE₁, FTE₂, FTE₃, FTE₄) tolérante vis-à-vis d'erreurs, et l'accès au(x) canal(canaux) de communication (KK₁, KK₂) est réalisé au moyen d'un procédé statique cyclique à tranches temporelles, qui est dérivé de la base de temps globale commune, caractérisé en ce qu'elle est agencée sous la forme d'un singlechip controller (dispositif de commande monopuce) ou sous la forme d'un singlechip microcomputer (micro-ordinateur monopuce) dans lequel est prévue une unité de contrôle de communication qui réunit les informations à transmettre à partir d'une zone de contrôle (K), d'une zone de données (D) et d'une zone CRC (Cyclic- Redundancy Check) (CRC), la zone CRC étant formée par des informations standards, qui sont caractérisées par un bit déterminé (I) de la zone de contrôle (K), par le chaînage de la zone de contrôle (K) et de la zone de données (D) et d'un état interne local d'une unité émettrice de contrôle de communication, et le singlechip controller ou le micro-ordinateur contenant l'unité de contrôle de communication est en outre prévu pour établir l'état local interne d'une telle unité de contrôle à partir de la liaison de durée globale avec une zone associée, dans laquelle à chaque unité (FTE₁, FTE₂, FTE₃, FTE₄), tolérante vis-à-vis d'erreurs, est associé un bit déterminé, dont l'état "VRAI" indique l'aptitude au fonctionnement et dont l'état "FAUX" indique un état d'erreur de cette unité (FTE₁, FTE₂, FTE₃, FTE₄) tolérante vis-à-vis d'erreurs, de sorte qu'une unité réceptrice de contrôle de communication peut identifier, au moyen du contrôle d'une information arrivante, aussi bien une information défectueuse qu'un écart entre les états internes des unités émettrice et réceptrice de contrôle de communication.

10. Unité de contrôle de ocmmunication selon la revendication 9, caractérisée en ce qu'elle comporte respectivement un compteur pour fixer le nombre d'informations reçues correctement et un compteur pour fixer le nombre d'informations reçues comportant des erreurs CRC.

11. Unité de contrôle de ocmmunication selon la revendication 9 ou 10, caractérisée en ce qu'elle comporte une logique, qui convient pour exécuter, après réception d'une information, une modification du type de fonctionnement de l'unité (FTE₁, FTE₂, FTE₃, FTE₄) tolérante vis-à-vis d'erreurs.

12. Unité de contrôle de ocmmunication selon l'une des revendications 9 à 11, caractérisée en ce qu'elle comporte une logique pour fixer l'instant d'arrivée et pour comparer ces instants d'arrivée aux instants d'émission, fixés a priori, d'une information.
